# EUROPEAN PATENT APPLICATION

(11) **EP 2 785 148 A2**
(43) Date of publication of application: **01.10.2014**
(21) Application number: 13182049.0
(22) Date of filing: 28.08.2013
(51) Int. Cl.: H05B 37/02

(54) **ELECTRICAL APPARATUS CONTROL SYSTEM**

(30) Priority: 25.03.2013 JP 2013062697
(71) Applicant: Toshiba Lighting & Technology Corporation, Yokosuka-shi Kanagawa 237-8510 (JP)
(72) Inventor: NOGUCHI, Yoko, Kanagawa, 237-8510 (JP); SASAI, Toshihiko, Kanagawa, 237-8510 (JP); YOSHIDA, Kazufumi, Kanagawa, 237-8510 (JP)
(74) Representative: Bokinge, Ole

(57) **Abstract**

According to one embodiment, an electrical apparatus control system which is configured by a plurality of electrical apparatuses includes an output unit which is provided on at least one first electrical apparatus among the plurality of electrical apparatuses, and transmits an obtained result of an information obtaining unit which obtains environmental information; and a reception unit which is provided on at least one second electrical apparatus other than the first electrical apparatus among the plurality of electrical apparatuses, and receives the obtained result which is transmitted from the output unit.

## Description

### FIELD

Embodiments described herein relate generally to an electrical apparatus control system.

### BACKGROUND

In the related art, various systems for controlling an electrical apparatus such as a lighting fixture were developed. For example, a lighting system which controls lighting using an output from an infrared human sensor which detects a motion when a person, an object, or the like moves in a sensing area is commercialized. In the lighting system, lighting is performed when a person is present, and lighting is not performed when a person is not present, and accordingly, it is possible to effectively reduce power consumption.

By using a sensor output in this manner, it is possible to effectively control an electrical apparatus such as a lighting fixture. However, since it is necessary to provide a sensor in each lighting fixture, the apparatus becomes complicated. In addition, since it is necessary to arrange a sensor at an appropriate position in order to obtain an effective sensor output, it is not easy to essentially provide a sensor in each apparatus.

In contrast to this, a system is also developed in which a plurality of electrical apparatuses are controlled using one sensor output. For example, in a lighting control device system which integrally controls a plurality of lighting fixtures, or the like, it is possible to perform a remote control of a lighting load such as a plurality of lighting fixtures which are provided in each illumination area such as each floor, each area, or the like, in an office building, various facilities, or the like, using an output from a human sensor or an illuminance sensor.

However, in such a lighting control device system, a sensor output is provided at a lighting control device, and the lighting control device controls each lighting fixture by generating a dimming signal corresponding to the sensor output. That is, in order to control each lighting fixture using a common sensor output, it is necessary to have a control device which generates a control signal for controlling each electrical apparatus such as a dimming signal from the sensor output, and accordingly, there is a problem that a circuit of the system becomes large in size.

### BRIEF DESCRIPTION OF THE DRAWINGS

FIG. 1 is a block diagram which illustrates an electrical apparatus control system according to a first embodiment.
FIG. 2 is an explanatory diagram which illustrates an example of a use form.
FIG. 3 is an explanatory diagram which illustrates an example of a table which is recorded in a destination storage unit in FIG. 1.
FIG. 4 is an explanatory diagram which illustrates a second embodiment.
FIG. 5 is an explanatory diagram which illustrates an example of a use form of an electrical apparatus control system according to the second embodiment.

### DETAILED DESCRIPTION

In general, according to one embodiment, an electrical apparatus control system which is configured by a plurality of electrical apparatuses includes an output unit which is provided on one or more first electrical apparatuses among the plurality of electrical apparatuses, and transmits an obtained result of an information obtaining unit which obtains environmental information; and a reception unit which is provided on one or more second electrical apparatuses other than the one or more first electrical apparatuses among the plurality of electrical apparatuses, and receives the obtained result which is transmitted from the output unit.

In addition, the electrical apparatus control system according to the embodiment may include an integrating unit which receives the obtained result which is transmitted from the output unit of the one or more first electrical apparatuses, and transmits the received obtained result to the reception unit of the one or more second electrical apparatuses.

In addition, in the electrical apparatus control system according to the embodiment, the integrating unit may selectively transmit the result obtained from the one or more first electrical apparatuses to the one or more second electrical apparatuses corresponding to the first electrical apparatus.

In addition, in the electrical apparatus control system according to the embodiment, the integrating unit may include an integrating reception unit which receives the obtained result which is transmitted from the output unit of the one or more first electrical apparatuses; a data storage unit which stores the obtained result which is received by the integrating reception unit; a destination storage unit in which the one or more second electrical apparatuses as a transmission destination of the environmental information is defined in each of the one or more first electrical apparatuses; and an integrating transmission unit which transmits the obtained result which is stored in the data storage unit to the one or more second electrical apparatuses according to stored contents of the destination storage unit.

In addition, in the electrical apparatus control system according to the embodiment, the integrating reception unit and the integrating transmission unit may transmit the obtained result using a wireless communication.

In addition, in the electrical apparatus control system according to the embodiment, the one or more second electrical apparatuses may include a functional unit which executes a predetermined function using an electrical energy; and a function control unit which controls a function of the functional unit based on the obtained result.

In addition, in the electrical apparatus control system according to the embodiment, the environmental information may be information of a physical quantity of a space which is obtained by a sensor.

In addition, in the electrical apparatus control system according to the embodiment, the information obtaining unit may obtain the information on the physical quantity using at least one of a human sensor, an illuminance sensor, a temperature sensor, and an atmospheric pressure sensor.

In addition, in the electrical apparatus control system according to the embodiment, the environmental information may be information on time which is obtained using a clock.

In addition, in the electrical apparatus control system according to the embodiment, plural second electrical apparatuses among the one or more second electrical apparatuses may receive common time information which is transmitted from the output unit of one first electrical apparatus among the one or more first electrical apparatuses.

Hereinafter, exemplary embodiments will be described in detail with reference to drawings.

### First Embodiment

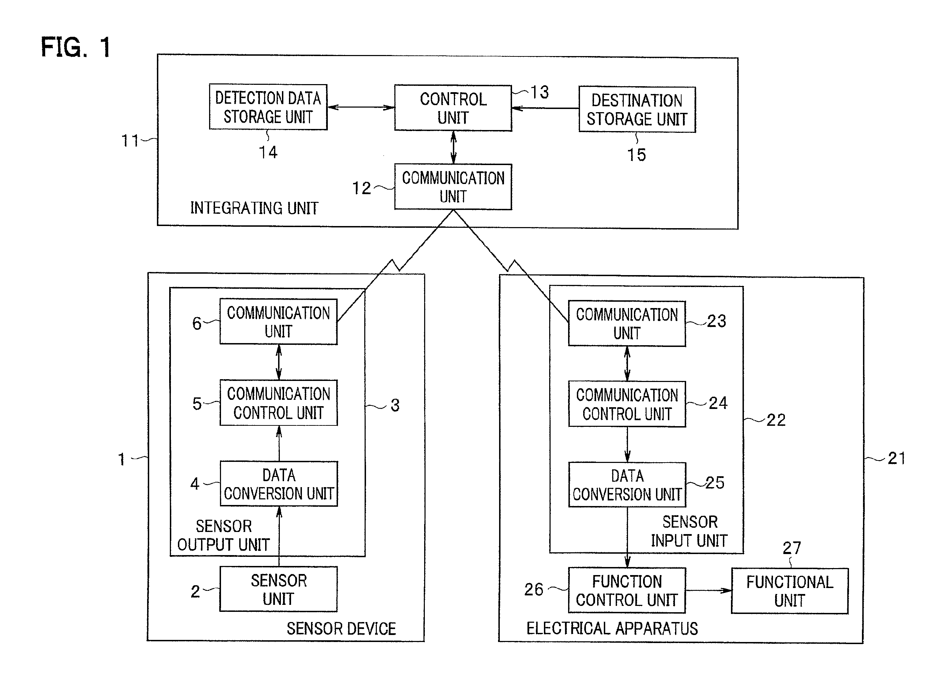

FIG. 1 is a block diagram which illustrates an electrical apparatus control system according to a first embodiment.

In FIG. 1, a sensor device 1 includes a sensor unit 2. As the sensor unit 2, it is possible to adopt various sensors which obtain environmental information on an indoor space, an outdoor space, or the like. For example, as the sensor unit 2, various sensors such as a human sensor, an illuminance sensor, a temperature sensor, and an atmospheric pressure sensor can be adopted.

The sensor unit 2 detects, for example, a physical quantity of a space as environmental information, and outputs a detection result. For example, the sensor unit 2 converts environmental information into a quantity of electricity such as a current value, and outputs the quantity as the detection result. According to the embodiment, the detection result of the sensor unit 2 is output through a sensor output unit 3. The sensor output unit 3 includes a data conversion unit 4 which converts the detection result of the sensor unit 2 into information which can be transmitted through a predetermined transmission path. The data conversion unit 4 converts the detection result of the sensor unit to detection data, and outputs the detection data to a communication control unit 5.

The communication control unit 5 can make detection data be transmitted to the outside through a predetermined communication line by controlling a communication unit 6. The communication unit 6 can adopt various wireless or wired transmission paths as the communication line. For example, as the communication line which is adopted by the communication unit 6, it is possible to adopt various communication lines such as a wired or wireless LAN, or Bluetooth (registered trademark).

The communication unit 6 transmits the detection data which is controlled by the communication control unit 5, and is input to a predetermined destination. In addition, the communication unit 6 transmits the detection data by adding its own address information thereto. According to the embodiment, the communication unit 6 transmits the detection data to an integrating unit 11, for example.

The integrating unit 11 includes a communication unit 12 which is capable of transmitting and receiving detection data. The communication unit 12 is controlled by a control unit 13, and receives detection data from one or more sensor devices, for example, a plurality of sensor devices including a sensor device 1. The integrating unit 11 is provided with a detection data storage unit 14, and the control unit 13 causes each sensor device to store the detection data in the detection data storage unit 14.

In addition, the integrating unit 11 is also provided with a destination storage unit 15 which stores an address of a device to which each detection data is transmitted. The destination storage unit 15 is stored with an address of a device as a transmission destination of the detection data in each sensor device including the sensor device 1, and the control unit 13 controls the communication unit 12 so that each detection data which is stored in the detection data storage unit 14 is transmitted to a destination which is stored in the destination storage unit 15.

In this manner, detection data from each sensor device is respectively transmitted to a destination device corresponding to the detection data. In addition, the integrating unit 11 may also transmit detection data from a sensor output unit 3 in each sensor device to a predetermined device by having only a relaying function.

An electrical apparatus 21 according to the embodiment is provided with a sensor input unit 22. The sensor input unit 22 includes a communication unit 23 which receives detection data transmitted from the communication unit 12 of the integrating unit 11 through a predetermined communication line. In addition, as a communication line, it is possible to adopt each wired, or wireless transmission path, for example, various communication lines such as a wired or wireless LAN, Bluetooth (registered trademark), or the like.

A communication unit 23 is controlled by a communication control unit 24, receives detection data which is transmitted to its own unit, and outputs the data to a data conversion unit 25. The data conversion unit 25 converts the detection data into information for controlling a function of a functional unit 27, and outputs the data to a function control unit 26. The function control unit 26 controls the functional unit 27 based on the detection data, and causes the functional unit 27 to execute a predetermined function using a sensor output. The functional unit 27 executes various functions such as lighting, a display of an image, an output of a sound, adjusting of a temperature, and the like, and such various functions are controlled according to the sensor output. For example, the function control unit 26 can perform various function controls such as starting or terminating of functional operations of the functional unit 27, a dimming control, an air quantity control, and adjusting of a temperature, according to a sensor output.

In addition, in FIG. 1, only one sensor device and one electrical apparatus are illustrated. However, it is possible to transmit detection data of a sensor device by transmitting detection data from a plurality of sensor devices to the integrating unit 11, and by designating each destination of an electrical apparatus to which the detection data of each sensor device is to be transmitted among the plurality of electrical apparatuses in the integrating unit 11. In addition, the sensor device 1 is described as a single device. However, the sensor device may be embedded in various electrical apparatuses which are not shown.

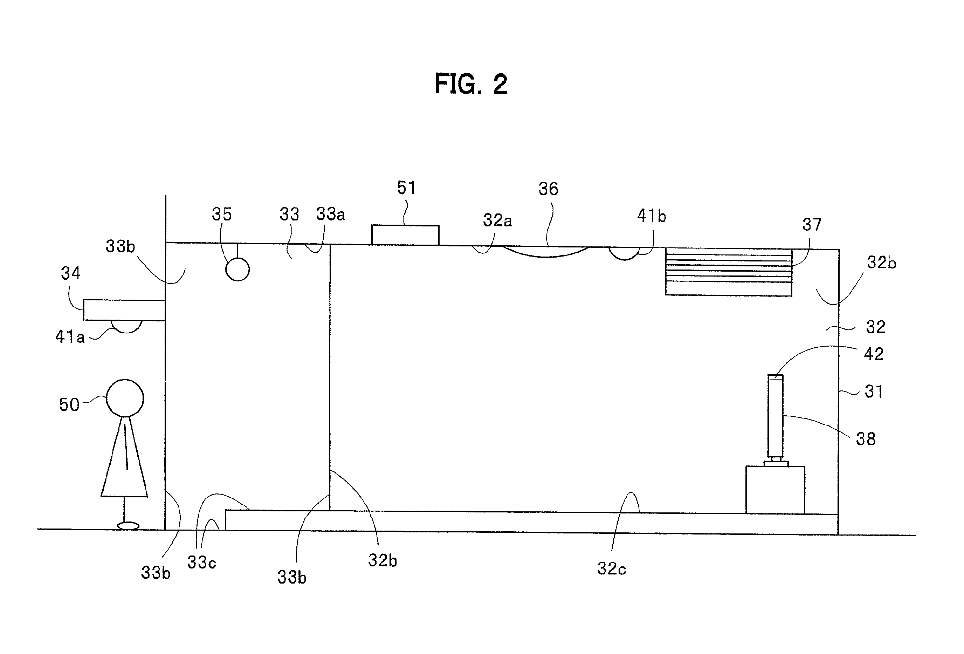

Subsequently, operations of the embodiment which are configured in this manner will be described with reference to FIG. 2. FIG. 2 is an explanatory diagram which illustrates an example of a use form of the electrical apparatus control system according to the embodiment.

FIG. 2 illustrates various electrical apparatuses which are provided in a house 31. The house 31 includes two indoor spaces 32 and 33. A sunshade of an entrance 34 of the house 31 is attached with a human sensor 41. The human sensor 41 detects a person 50 who is close to the entrance, and outputs a detection result. According to the embodiment, the human sensor 41 is a sensor device which includes the above described sensor output unit 3.

The indoor space 32 is a space which is surrounded with a ceiling face 32a, a wall face 32b, and a floor face 32c, and the indoor space 33 is a space which is surrounded with a ceiling face 33a, a wall face 33b, and a floor face 33c. The ceiling face 32a of the indoor space 32 is attached with a human sensor 41b. The human sensor 41b is also a sensor device which includes the above described sensor output unit 3.

In addition, the indoor space 32 is provided with a television receiver 38 on a pedestal which is provided on the floor face 32c. The television receiver 38 is embedded with a brightness sensor 42. The brightness sensor 42 is a sensor device which includes the above described sensor output unit 3.

A lighting fixture 35 is attached to the ceiling face 33a of the indoor space 33, and a lighting fixture 36 is attached to the ceiling face 32a of the indoor space 32. In addition, an air conditioner 37 is arranged on the wall face 32b of the indoor space 32. The lighting fixtures 35 and 36, the air conditioner 37, and the television receiver 38 are electrical apparatuses which include the above described sensor input unit 22. That is, the television receiver 38 is embedded with both circuits of the sensor output unit 3 and the sensor input unit 22 in FIG. 1.

Sensor outputs from a human sensor 41a, the human sensor 41b, and the brightness sensor 42 are transmitted to an integrating unit 51 through the transmission paths, for example, the wireless LAN, Bluetooth (registered trademark), or the like. The integrating unit 51 has the same configuration as that of the integrating unit 11 in FIG. 1.

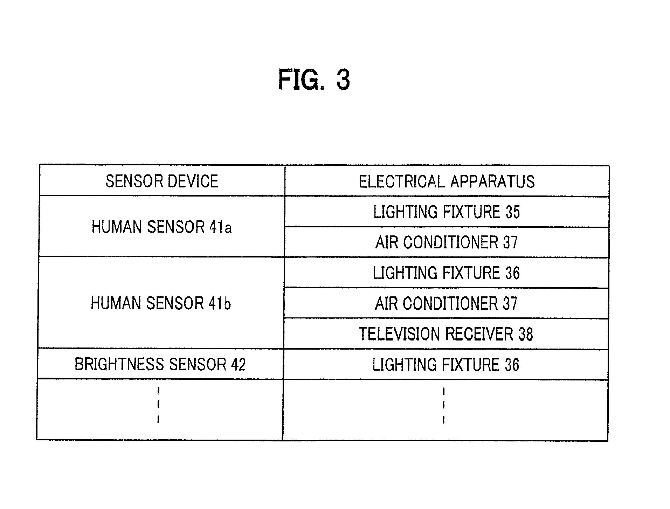

The integrating unit 51 causes each sensor output to be stored in the detection data storage unit 14, and transmits each sensor output to a corresponding electrical apparatus based on information in the destination storage unit 15. For example, it is assumed that a table which is illustrated in FIG. 3 is stored in the destination storage unit 15. In addition, in FIG. 3, a sensor device and an electrical apparatus are denoted by reference numerals corresponding to those in FIG. 2. However, in practice, the table is recorded using a device-specific ID or the like.

In FIG. 3, it is illustrated that a sensor output of the human sensor 41a is supplied to the lighting fixture 35 and the air conditioner 37. In addition, it is illustrated that a sensor output of the human sensor 41b is supplied to the lighting fixture 36, the air conditioner 37, and the television receiver 38, and a sensor output of the brightness sensor 42 is supplied to the lighting fixture 36.

The lighting fixture 35 can be configured so as to turn to an ON state by a sensor output which denotes a presence of a person, and turn to an OFF state by a sensor output which denotes an absence of a person. For example, when the human sensor 41a detects that the person 50 is close to the entrance, a sensor output which denotes the detection result is transmitted from the human sensor 41a, and is supplied to the lighting fixture 35 through the integrating unit 11. In this manner, the lighting fixture 35 turns to an ON state when the person 50 is close to the entrance, and can illuminate the indoor space 33 which is close to the entrance.

In addition, the air conditioner 37 can be configured so as to enter an operation state due to a sensor output denoting the presence of a person, and enter a non-operation state due to a sensor output denoting a non-presence of a person. For example, when the human sensor 41a detects that the person 50 is close to the entrance, a sensor output denoting the detection result is transmitted from the human sensor 41a, and is supplied to the air conditioner 37 through the integrating unit 11. In this manner, the air conditioner 37 enters an operation state when the person 50 is close to the entrance, and can start an air-conditioning control of the indoor space 32, for example, a living room, or the like.

The lighting fixture 36 can be configured so as to turn to an ON state by a sensor output which denotes a presence of a person, and turn to an OFF state by a sensor output which denotes an absence of a person. For example, when the human sensor 41b detects that a person is present in the indoor space 32, a sensor output which denotes the detection result is transmitted from the human sensor 41b, and is supplied to the lighting fixture 36 through the integrating unit 11. In this manner, the lighting fixture 36 can illuminate the indoor space 32 in which the person is present.

Similarly, the television receiver 38 can be configured so as to be turned on due to a sensor output denoting a presence of a person, and enter a display state, and to be turned off due to a sensor output denoting an absence of a person, and enter a non-display state. For example, when the human sensor 41b detects that a person is present in the indoor space 32, a sensor output denoting the detection result is transmitted from the human sensor 41b, and is supplied to the television receiver 38 through the integrating unit 11. In this manner, the television receiver 38 can display a television program in the indoor space 32 in which a person is present.

In addition, it is possible to configure the air conditioner 37 so that, in the operation state, an air blowing direction, or the like, is controlled by a sensor output denoting a present position of a person, and the direction in which the person is present is effectively subjected to an air-conditioning control. For example, when the human sensor 41b detects that a person is present in a center of a room, a sensor output denoting the detection result is transmitted from the human sensor 41b, and is supplied to the air conditioner 37 through the integrating unit 11. In this manner, the air blowing direction or the like of the air conditioner 37 which is working is controlled so that the direction in which the person is present in the center of the indoor space 32 is effectively subjected to the air-conditioning control.

In general, in many cases, air-conditioning equipment such as an air conditioner is provided alongside a wall, and when a person is located in the vicinity of a center of a room, or the like, it is not easy to detect a position of the person with high precision with a human sensor which is embedded in the air-conditioning equipment. In contrast to this, if it is a human sensor which is provided on a ceiling or the like, it is possible to detect a position of a person in a center of a room with high precision, and it becomes easy to perform an air-conditioning control in an area in which a person is present, thereby effectively reducing power consumption, or the like, using a sensor output of such a sensor device.

In addition, the lighting fixture 36 can be configured so that a dimming control is possible due to a sensor output denoting a detection result of brightness. When a brightness sensor 42 which is embedded in the television receiver 38 detects brightness in the indoor space 32, a sensor output denoting the detection result is transmitted from the brightness sensor 42, and is supplied to the lighting fixture 36 through the integrating unit 11. In this manner, the lighting fixture 36 can perform a dimming control of the indoor space 32 according to the detection result of the brightness. In addition, a light distribution of the lighting fixture 36 may be controlled according to a detection result of the brightness sensor 42 so that light is not reflected on a television monitor when watching television.

For example, it is possible to provide the brightness sensor 42 on the front surface of the television receiver 38. In this case, the brightness sensor 42 can detect brightness on a vertical plane with high precision. It is possible to obtain an environment which is suitable for watching television by performing a dimming control of the lighting fixture 36 so that illuminance on the vertical plane in the vicinity of a television screen becomes a predetermined value based on detection information of the brightness sensor 42. In addition, when a separate sensor is provided on a floor, or the like, there is a case in which it is not possible to detect brightness with high precision due to an influence of furniture, or the like. Accordingly, a brightness sensor 42 which is provided on the front surface of a television is excellent in detecting brightness compared to a case in which the sensor is provided on a horizontal plane of a floor, or the like.

In this manner, according to the embodiment, it is possible to use a sensor output of a sensor device in an arbitrary electrical apparatus by providing a sensor output unit in a sensor device, and providing a sensor input unit in the electrical apparatus. There is a case in which a position for providing an electrical apparatus is not preferable as a position for providing a sensor controlling the electrical apparatus. According to the embodiment, it is possible to arrange a sensor device at a position which is different from an arranging position of an electrical apparatus, and it is possible to control each electrical apparatus with high precision. In addition, it is possible to provide an output of one sensor device to a plurality of electrical apparatuses, and to further improve a degree of freedom of an installation location by reducing the number of necessary sensor devices.

In addition, according to the embodiment, a communication unit of a sensor device is described as a unit which outputs detection data to the integrating unit, and transmits the data to each electrical apparatus from the integrating unit. However, it is clear that the sensor device may directly transmit the sensor output to each electrical apparatus. For example, when a transmission destination of a sensor output is fixed in a sensor device, or the like, it is possible for the sensor device to directly transmit the sensor output to an electrical apparatus. In addition, in a case in which only one sensor device is present in a predetermined range, or the like, the sensor device may broadcast a sensor output.

### Second Embodiment

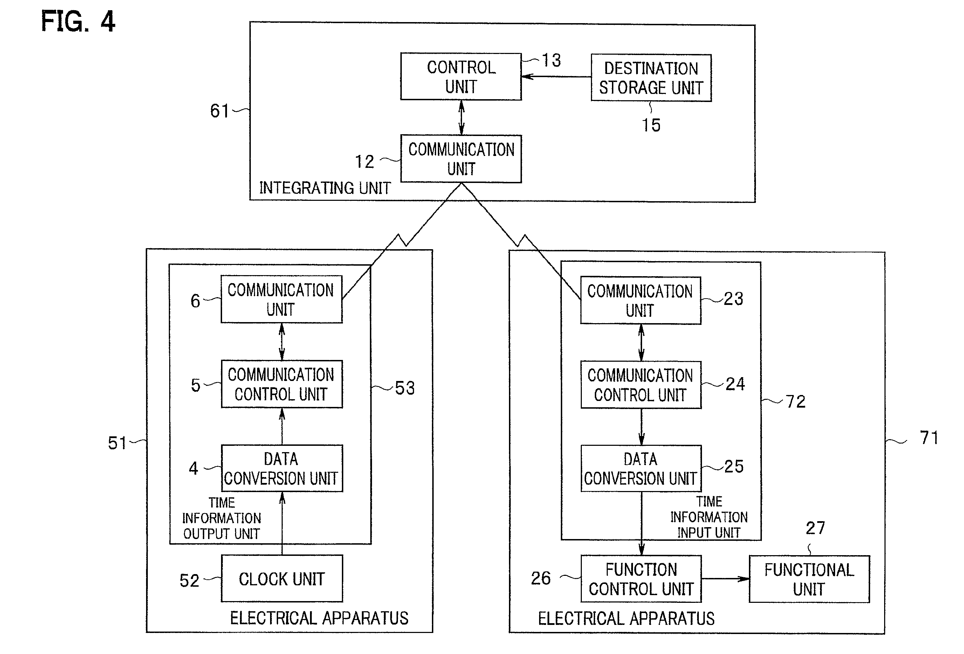

FIG. 4 is an explanatory diagram which illustrates a second embodiment. In FIG. 4, the same constituent elements as those in FIG. 1 are given the same reference numerals, and descriptions thereof will be omitted.

According to the first embodiment, it is configured such that a sensor output from a sensor device can be transmitted to one or more electrical apparatuses. However, according to the embodiment, time information from an electrical apparatus can be transmitted to one or more other electrical apparatuses.

In FIG. 4, an electrical apparatus 51 includes a clock unit 52, and the clock unit 52 can output time information. On the other hand, an electrical apparatus 71 does not have a clock function. The electrical apparatus 51 includes a time information output unit 53, and the time information output unit 53 has the same configuration as that in the sensor output unit 3 in FIG. 1, and can transmit time information from the clock unit 52 to an integrating unit 61.

In addition, according to the embodiment, the time information output unit 53 may directly transmit time information to other electrical apparatuses which do not have a clock function.

An integrating unit 61 is different from the integrating unit 11 in FIG. 1, since the detection data storage unit 14 is omitted in the integrating unit 61. The integrating unit 61 transmits time information from the electrical apparatus 51 to another electrical apparatus 71 which does not have a clock function using information which is stored in the destination storage unit 15.

An electrical apparatus 71 includes a time information input unit 72 which has the same configuration as the sensor input unit 22 in FIG. 1. The time information input unit 72 receives time information from the integrating unit 61, or the electrical apparatus 51 having a clock function, and outputs the information to a function control unit 26.

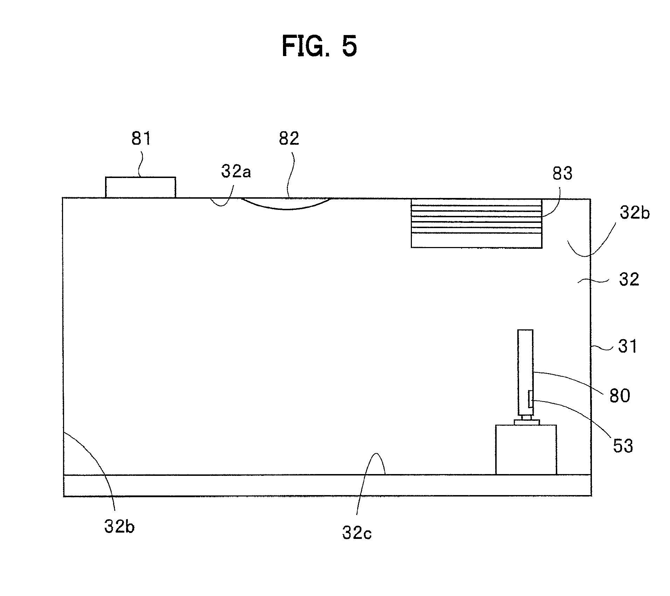

Subsequently, operations of the embodiment which are configured in this manner will be described with reference to FIG. 5. FIG. 5 is an explanatory diagram which illustrates an example of a use form of an electrical apparatus control system according to the second embodiment.

FIG. 5 illustrates various electrical apparatuses which are provided in a house 31. The house 31 has an indoor space 32. The indoor space 32 is a space which is surrounded with a ceiling face 32a, a wall face 32b, and a floor face 32c. The indoor space 32 is provided with a television receiver 80 on a pedestal which is provided on the floor face 32c. The television receiver 80 has a clock function, and is an electrical apparatus which includes the above described time information output unit 53 which transmits time information.

The time information output unit 53 of the television receiver 80 transmits the time information to an integrating unit 81 through a transmission path, for example, a wireless LAN, Bluetooth (registered trademark), or the like. The integrating unit 81 has the same configuration as the integrating unit 61 in FIG. 4.

The ceiling face 32a of the indoor space 32 is attached with a lighting fixture 82. In addition, the wall face 32b of the indoor space 32 is arranged with an air conditioner 83. These lighting fixture 82 and the air conditioner 83 are electrical apparatuses including the above described time information input unit 72.

The integrating unit 81 transmits received time information to the lighting fixture 82 and the air conditioner 83 based on information in the destination storage unit 15. It is possible to configure the lighting fixture 82, for example, so as to turn to an ON state at a predetermined first time, and turn to an OFF state at a predetermined second time. In addition, it is possible to configure the air conditioner 83 so as to enter an operation state at a predetermined third time, and enter a non-operation state at a predetermined fourth time, for example.

Time information of the television receiver 80 is supplied to the lighting fixture 82 and the air conditioner 83 from the output unit 53 through the integrating unit 81.

In this case, the lighting fixture 82 turns to an ON state when it reaches the first time, and turns to an OFF state when it reaches the second time. In addition, when it reaches the third time, the air conditioner 83 enters an operation state, and when it reaches the fourth time, the air conditioner 83 enters a non-operation state.

In general, a remote control unit which operates a lighting fixture has a clock. However, the lighting fixture itself does not have a clock. For this reason, when reserving an ON/OFF time, it is necessary to set a time in the remote control unit, and set the ON/OFF time by performing a reservation operation of the remote control unit. The same is applied to the air conditioner, and in general, it is necessary to perform a timer reservation using a remote control unit. That is, it is necessary to perform a timer reservation of each electrical apparatus using an individual remote control unit, and there is a case in which it is not possible to accurately control each electrical apparatus at a desired time due to a deviation in time information of a clock of each remote control unit. In contrast to this, according to the embodiment, it is possible to control each electrical apparatus using common time information, and to accurately control each electrical apparatus at a desired time.

In this manner, according to the embodiment, it is possible to use time information which is generated in a predetermined electrical apparatus in an arbitrary electrical apparatus by providing a time information output unit in an electrical apparatus having a clock function, and by providing a time information input unit in an electrical apparatus not having a clock function. Due to this, the common time information can be used by a plurality of electrical apparatuses, in addition to an advantage in which mounting of a clock circuit on each electrical apparatus is not necessary, and it is possible to control each electrical apparatus at a common time without initially setting a time of a remote control unit for each electrical apparatus to a common time.

By adopting the embodiment, it is possible to control all electrical apparatuses which maintain the common time information at the same time, and it is also possible to cause a television receiver, a lighting fixture, and an air conditioner to start up at the same time, for example, at the rising hour.

In addition, by combining the first and second embodiments, it is also possible to perform a control such as a start of a dimming control according to a detection result of a brightness sensor when it becomes a predetermined time.

While certain embodiments have been described, these embodiments have been presented by way of example only, and are not intended to limit the scope of the invention. Indeed, the novel systems described herein may be embodied in a variety of other forms; furthermore, various omissions, substitutions and changes in the form of the systems described herein may be made without departing from the spirit of the inventions. The accompanying claims and their equivalents are intended to cover such forms or modifications as would fall within the scope and spirit of the inventions.

## Claims

1. An electrical apparatus control system which is configured by a plurality of electrical apparatuses comprising:
an output unit which is provided on one or more first electrical apparatuses among the plurality of electrical apparatuses, and transmits an obtained result of an information obtaining unit which obtains environmental information; and
a reception unit which is provided on one or more second electrical apparatuses other than the one or more first electrical apparatuses among the plurality of electrical apparatuses, and receives the obtained result which is transmitted from the output unit.

2. The system according to claim 1, further comprising:
an integrating unit which receives the obtained result which is transmitted from the output unit of the one or more first electrical apparatuses, and transmits the received obtained result to the reception unit of the one or more second electrical apparatuses.

3. The system according to claim 2,
wherein the integrating unit selectively transmits the result obtained from the one or more first electrical apparatuses to the one or more second electrical apparatuses corresponding to the one or more first electrical apparatuses.

4. The system according to claim 2,
wherein the integrating unit includes:
an integrating reception unit which receives the obtained result which is transmitted from the output unit of the one or more first electrical apparatuses;
a data storage unit which stores the obtained result which is received by the integrating reception unit;
a destination storage unit in which the one or more second electrical apparatuses as a transmission destination of the
environmental information is defined in each of the one or more first electrical apparatuses; and
an integrating transmission unit which transmits the obtained result which is stored in the data storage unit to the one or more second electrical apparatuses according to stored contents of the destination storage unit.

5. The system according to claim 4,
wherein the integrating reception unit and the integrating transmission unit transmit the obtained result using a wireless communication.

6. The system according to claim 1,
wherein the one or more second electrical apparatuses include:
a functional unit which executes a predetermined function using an electrical energy; and
a function control unit which controls a function of the functional unit based on the obtained result.

7. The system according to claim 1,
wherein the environmental information is information of a physical quantity of a space which is obtained by a sensor.

8. The system according to claim 7,
wherein the information obtaining unit obtains the information on the physical quantity using at least one of a human sensor, an illuminance sensor, a temperature sensor, and an atmospheric pressure sensor.

9. The system according to claim 1,
wherein the environmental information is information on time which is obtained using a clock.

10. The system according to claim 9,
wherein plural second electrical apparatuses among the one or more second electrical apparatuses receive common time information which is transmitted from the output unit of one first electrical apparatus among the one or more first electrical apparatuses.
